# EUROPEAN PATENT APPLICATION

(11) **EP 1 233 559 A1**
(43) Date of publication of application: **21.08.2002**
(21) Application number: 01963421.1
(22) Date of filing: 05.09.2001
(51) Int. Cl.: H04J 13/04, H04B 7/08, H04B 7/26

(54) **RADIO COMMUNICATION TERMINAL AND INTERFERENCE CANCELING METHOD**

(30) Priority: 06.09.2000 JP 2000269984
(71) Applicant: MATSUSHITA ELECTRIC INDUSTRIAL CO., LTD., Kadoma-shi, Osaka 571-8501 (JP)
(72) Inventor: HIRAMATSU, Katsuhiko, Yokosuka-shi, Kanagawa 238-0031 (JP)
(74) Representative: Grünecker, Kinkeldey, Stockmair & Schwanhäusser Anwaltssozietät
(86) International application number: JP0107676
(87) International publication number: WO02021745

(57) **Abstract**

In a radio communication terminal apparatus or an interference cancellation method a known signal is adopted as a common midamble, transmitting selection diversity which applied in a CDMA radio communication system in which a BS carries out communications with a MS provided with MUD, and interference from other users and fading influences are mitigated. The signal transmitted from base station apparatus 101 which is provided with a plurality of antenna branches and performs transmitting selection diversity is received, in symbol power calculating section 150, the symbol power of all codes excluding the code assigned to the radio-communication terminal apparatus is calculated for every antenna branch, in code number detecting section 208, interference code number is detected for every antenna branch based on a known signal included in the receiving signal, in interference code selecting section 209, interference code corresponding to the detected interference code number is selected for every antenna branch based on the calculated symbol power, and interference caused by the selected interference code is cancelled by interference cancellation processing in MUD 210.

## Description

### Technical Field

The present invention relates to an interference canceller which mitigates the influence of an interference from other users in a radio communication system based on a CDMA technology (henceforth, referred to as "CDMA radio communication system"), specifically, relates to an interference canceller of a multiuser type.

### Background Art

A CDMA (Code Division Multiple Access) technology using spread spectrum communication is one of the multiple access technology in which a plurality of radio communication apparatuses communicate mutually. The CDMA technology has the feature that a large number of users can be accommodated in the system and high spectral efficiency can be objected as compared with a TDMA (Time Division Multiple Access) technology or FDMA (Frequency Division Multiple Access) Technology.

In CDMA system, it is reported that the channel capacity is limited by the interference from other users in the cell itself. Therefore, in order to increase the channel capacity, it is necessary to mitigate interference by a certain method. Interference canceller (IC) is nominated as a processing for mitigating the interference, and the most common type is a multiuser interference canceller (hereinafter referred to as Multiuser Detection abbreviated as "MUD"). Since all spreading codes excluding the spreading code assigned to a certain user (henceforth, it is referred to as "interference codes") cause interference in a CDMA system, MUD performs the processing of mitigating the influence of the interference caused by interference codes. Indeed, MUD performs correlation processing to the receiving signal using the interference codes, generates a reproduction of a demodulated data (interference replica) for every interference code by carrying out a complex multiplication of a channel estimation value of a signal with which the multiplication of the interference codes was carried out subsequently to correlation processing result, and mitigates the influence of interference by subtracting this interference replica from the receiving signal.

In conventional CDMA system, a midamble is adopted as a known signal used for channel estimation, etc. The midamble is generated by shifting a known basic code that is repeated every predetermined chip period by a predetermined chip unit.

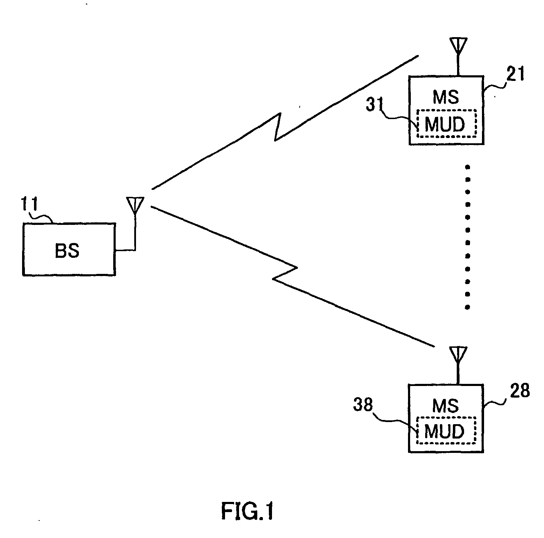

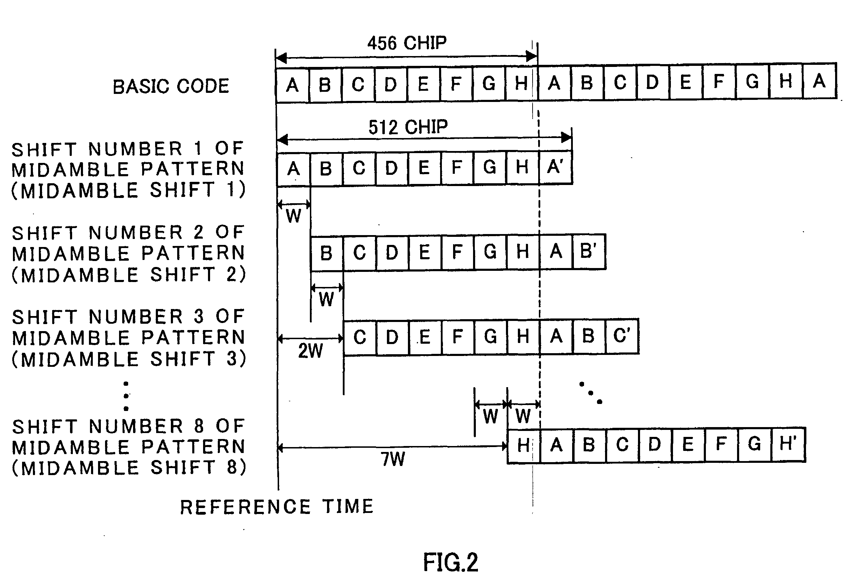

In FIG. 1, a midamble is adopted as a known signal, the figure shows a CDMA radio communication system in which base station apparatus (henceforth, referred to as "BS") carries out radio communications based on CDMA technology with a radio communication terminal apparatus (henceforth, referred to as "MS") that is provided with a MUD. BS 11 carries out radio communication with MS 21-28. MS 21-28 are provided with MUD 31-38, respectively. It is assumed that the CDMA radio communication system shown in FIG. 1 uses spreading codes of spreading factor 16 (from spreading code #1 to spreading code #16). Therefore, a maximum of 16 users can be accommodated in BS 11.

FIG. 2 is a diagram illustrating the midamble generation procedures in a CDMA radio communications system. In addition, the generation procedures of midamble in the case when using eight mutually different blocks will be explained.

As shown in FIG. 2, each pattern of the midamble (henceforth, referred to as "Midamble pattern") is generated according to the procedures shown below using a basic code shifted every 456 (=8W) chip period. In addition, this basic code that includes eight mutually different blocks of A to H is known to both base station apparatus and radio communication terminal apparatus . Each of blocks A to H is 57 (=W) chip length.

In first step, the phase of the aforementioned basic code is shifted to the right towards the figure center only by {W × (n-1)} chips from a reference time. Here, n is the number of shifts of the basic code (midamble shift). As shown in FIG. 2, the shifted chip numbers are set, respectively, to 0 , ..., 7W instead of midamble shift 1, midamble 2, ..., midamble shift 8.

In second step, a reference block is assigned for each shifted basic code, and the portion excluding the remaining 456 chips from the header of the assigned reference block is deleted. Here, for instance, block A is the reference.

In third step, each code of the remained only 456 chips length is shifted to the left towards the figure center only by {W × (n-1)}. For example, in the case of midamble shift 2, the code of only the remaining 456 chips length is shifted left towards the figure center only by W such that block B is located at the left rear end of the code followed by C, D, E, F, G, H right towards the figure center and block A is located at the rear end (right side) of the code.

In forth step, similar block to the tip block in each code after the shift is added at the rear end such that the whole code becomes a 512 chip length code, and this code serves as a midamble pattern of eact midamble shift. For example, in the case of midamble shift 2, similar block B' to the head block B after shift is added to the rear end and it serves as a midamble pattern of midamble shift 2.

By the way, the aforementioned midamble acquired attention to midamble transmission method in the downlink channel which is classified into two kinds. One is an individual midamble in which transmission is carried out by assigning a midamble of different pattern for each spreading code, and the other kind is common midamble in which same (common) midamble is notified to all radio communication terminal apparatuses.

Next, the operation of the CDMA radio communication system shown in FIG. 1 is explained separately for the case where individual midamble is adopted and the case where common midamble is adopted as a midamble.

First, the case when adopting an individual midamble as a midamble will be explained. In this case, the midambles from midamble 1 to midamble 8 are, respectively, correspond to spreading code #1 to spreading code #8, and such correspondence relation is known to both BS and MS. It is not possible to use the spreading code #9 to spreading code #16 since there is no midamble which should be assigned thereto. BS 11 constructs a transmission signal for MS 21-28 by adding a midamble assigned for each spreading code in a midamble part which is in between the data parts, and transmits this signal to the corresponding MS 21-28 after multiplexing.

MS 21-28 receives the signal transmitted from BS 11, and referring to the midamble included in the received signal, decides which spreading code is multiplied by to obtain the signal that is multiplexed in the receiving signal, and notifies the decision result to MUD 31-38 with which MS is provided. MUD 31-38 knows from decision result which spreading code serves as interference code, and performs correlation processing to the received signal using the spreading code that serves as interference code. Next, by performing a complex multiplication on the channel estimation value obtained from the result of correlation processing, an interference replica is generated, and this interference replica is subtracted from the received signal. In CDMA system, all spreading codes serve as interference codes except the spreading code assigned to the respective MS. MUD 31-38 obtains the desired demodulated data by carrying out the subtraction processing of the interference replica caused by all interference codes from the received signal.

However, when an individual midamble is adopted as a known signal, there is a problem that the communication efficiency is deteriorated because the length of the midamble becomes longer when the number of MS's accommodated by base station apparatus increases, and the ratio of the data portion which occupied into a transmission slot decreases. On the contrary, when communication efficiency is maintained, the pattern of midamble which can be used is restricted and there is a problem that the spreading code assigned to a cell cannot be used effectively. Therefore, common midamble is requested to be adopted as a known signal in a system of which a high-speed communication is required.

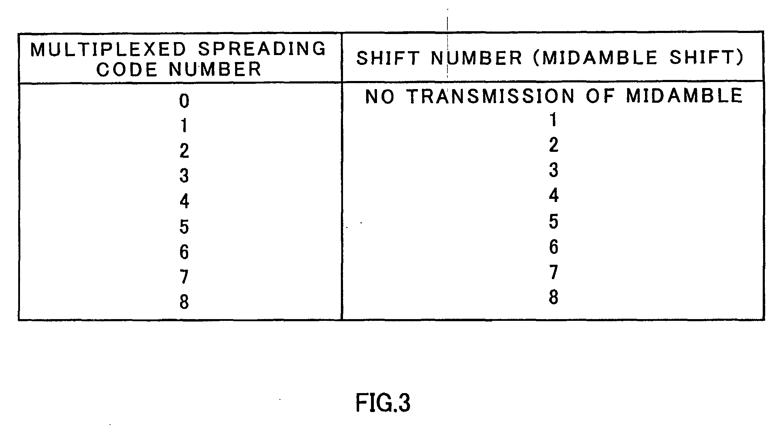

Next, the case where a common midamble is adopted as a midamble will be explained. BS 11 notifies each of MS 21-28 of either midamble from midamble 1 to midamble 8 which has been added in an assigned midamble part that is located between data parts. In common midamble, the number of multiplexed codes have correspondence relation with midamble shifts. Such a correspondence relation is shown in FIG. 3. The correspondence relation shown in this figure is known to both BS and MS. FIG. 3 is a table showing the correspondence relation between the multiplexed spreading code number and the number of shifts from a common midamble reference time.

MS 21-28 receives the signal transmitted from BS 11, detects the midamble shift included in the received signal, and detects the number of the spreading code multiplexed in the transmission side and which corresponds to the detected midamble shift with reference to the table shown in FIG. 3. On the other hand, MS 21-28 performs the correlation processing on the received signal to obtain a RAKE combining using a unique spreading code of each MS 21-28, adds up the RAKE combining results over a certain time interval and calculates the symbol power. Moreover, the detected spreading code number corresponds to certain spreading code is chosen sequentially according to the larger symbol power as an interference code. The symbol power is set to 1 when the spreading code is multiplexed in the signal transmitted by BS, and is set to 0 when the spreading code is not multiplexed. The selection result is notified to MUD 31-38 which are provided in MS. MUD 31-38 generates an interference replica in the same way as that of the individual midamble case, and obtains the desired demodulated signal by carrying out the processing of subtracting the interference replica from the received signal.

By the way, in a radio communication system, recently, a space diversity has been adopted in which a base station apparatus is provided with a plurality of antenna branches in order to secure a plurality of paths. As one kind of space diversity, there is a selection diversity which selects the optimum antenna branch based on propagation environments. Hereafter, the technology of using a selection diversity in a transmission side is called transmitting selection diversity. Since such a transmitting selection diversity can transmit the signal of the best propagation path environment selected among a plurality of propagation paths, it can mitigate the influence of fading.

However, because it is unknown from which antenna branch the interference code has been transmitted in the case when a transmitting selection diversity is applied to the conventional CDMA radio communication system and carrying out radio communication between BS and MS which provided with MUD based on CDMA technology in which a common midamble is adopted as a known signal, there is a problem that the interference replica cannot be generated because the channel estimation value of the signal multiplied by this interference code cannot be calculated.

### Disclosure of Invention

It is an object of the present invention to provide a radio communication terminal apparatus and interference cancellation method in which it is possible to mitigate both interference from other users and influence of fading by applying a transmitting selection diversity in a CDMA radio communication system and carrying out radio communication between BS and MS which provided with MUD based on CDMA technology in which a common midamble is adopted as a known signal.

A radio communication terminal apparatus according to the Embodiment of the present invention wherein, a base station apparatus which is provided with a plurality of antenna branches and applying a transmitting selection diversity communicates with a radio communication terminal apparatus which carries out radio communication based on CDMA technology and is provided with; symbol power calculating means to calculate, for every antenna branch, the symbol power of spreading codes excluding the spreading code assigned to the radio communication terminal apparatus, interference code number detecting means to detect, for every antenna branch, the interference code number with reference to a common known signal included in a receiving signal, interference code selecting means to select, for every antenna branch, interference code corresponds to interference code number detected by the interference code number detecting means according to the symbol power calculated by the symbol power calculating means and interference canceller to cancel the interference caused by interference codes which are selected by the interference code selecting means.

A cancellation method according to the Embodiment of the present invention comprising; step of receiving the signal transmitted from base station apparatus which is provided with a plurality of antenna branches and applying a transmitting selection diversity based on CDMA technology, step of calculating, for every antenna branch, the symbol power of the spreading codes excluding the assigned spreading code, step of detecting, for every antenna branch, the interference code number with reference to a common known signal included in the receiving signal, step of selecting, for every antenna branch, interference code corresponds to interference code number detected with reference to the calculated symbol power and step of cancelling the interference caused by the selected interference codes.

### Brief Description of Drawings

FIG. 1 is a block diagram showing a conventional CDMA radio communication system in which base station apparatus radio communicates, based on CDMA technology, with radio communication terminal apparatus which is provided with MUD;
FIG. 2 is a diagram illustrating midamble generating procedures in a CDMA radio communication system;
FIG. 3 is a table showing the correspondence relation between the multiplexed spreading code number and the number of shifts from a common midamble reference time;
FIG. 4 is a block diagram showing a CDMA radio communication system according to the Embodiment of the present invention;
FIG. 5 is a block diagram showing a configuration of a radio communication terminal apparatus according to the Embodiment of the present invention;
FIG. 6A is a table showing the correspondence relation between spreading code numbers of antenna branches and number of shifts from a common midamble reference time;
FIG. 6B is a table showing the correspondence relation between spreading code numbers of another antenna branch 103 and number of shifts from a common midamble reference time; and
FIG. 7 is a table showing symbol power calculation result and every corresponding path thereof.

### Best Mode for Carrying out the Invention

The main aspect of the present invention is that, in a cellular system configured by providing a base station apparatus with a plurality of antenna branches and applying a transmitting selection diversity, such a base station apparatus performs radio communications with radio communication terminal apparatus which detects, for every antenna branch, the symbol power of all spreading codes excluding the spreading code assigned to the radio communication terminal apparatus, selects, for every antenna branch and based on the detected symbol power, the interference code of all users excluding the radio communication terminal apparatus spreading code correspond to interference code numbers detected for every antenna branch with reference to a common midamble included in the receiving signal, and able to mitigate the interference caused by the selected interference codes using MUD.

Hereinafter, the Embodiment of the present invention will be explained with reference to the accompanying drawing.

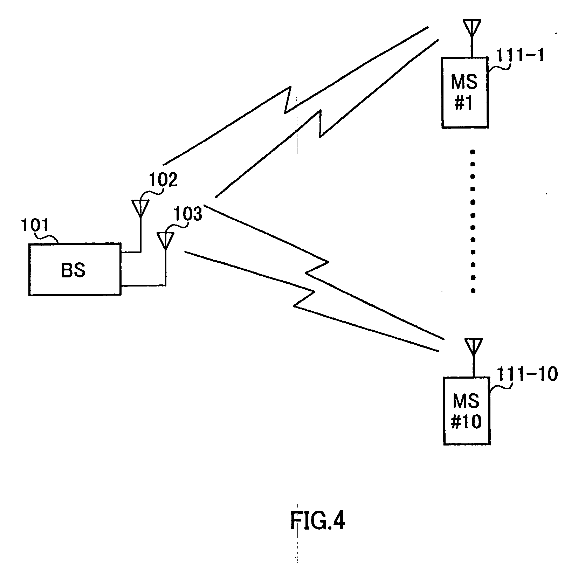

FIG. 4 is a block diagram showing a CDMA radio communication system according to the Embodiment of the present invention. The present Embodiment is an example of a cellular system which adopts a common midamble as a known signal and performs radio communications based on CDMA technology between base station apparatus (BS) that applying transmitting selection diversity and a radio communication terminal apparatus (MS) provided with an interference canceller of a multiuser type (MUD). Transmitting selection diversity is one of the space diversity in which base station apparatus is provided with a plurality of antenna branches to secure a plurality of propagation paths, and is the technology of using selection diversity by a transmission side which selects the optimal antenna branch according to propagation environments. Moreover, common midamble is a midamble which is common among all radio communication terminal apparatuses. The common midamble is constructed as shown in FIG. 2, and the number of multiplexed spreading codes correspond to the number of shifts from a certain reference time in the transmitted signal for every antenna branch.

BS 101 is configured as shown in FIG. 4 and provided with an antenna branch 102 and antenna branch 103, in addition, it carries out radio communications based on CDMA technology with MS 111-1 to 111-10. In the CDMA radio communications system shown in FIG. 4, it is assumed, for instance, 16 spreading codes (from spreading code #1 to spreading code #16) are used. Therefore, a maximum of 16 users can be accommodated in BS 101. Here, spreading code #1 is assigned to MS 111-1, and the other spreading code #2 to spreading code #16 are assigned to either of MS 111-2 to 111-10, respectively. BS 101 selects the optimum antenna branch by transmitting selection diversity for each MS, transmits the signal of the respective MS after being multiplexed using the selected antenna branch. In the present Embodiment, a common midamble is adopted as a known signal. BS 101 constructs the transmission signal of each MS 111-1 to 111-10 by including a common midamble in the midamble part set in between the data parts, multiplexes this transmission signal after each being multiplied by a mutually orthogonal spreading code, and transmits the result to each MS 111-1 to 111-10. That is to say, a plurality of spreading codes are multiplexed in the transmission signal of the BS 101.

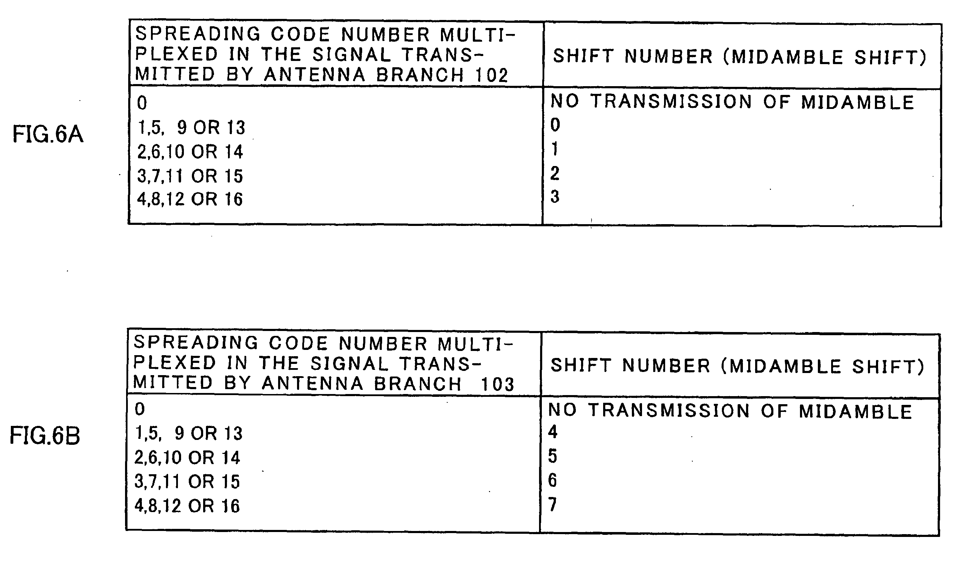

Because the number of shifts of the common midamble (midamble shift) is corresponding to the number of the multiplexed spreading codes as shown in FIG. 6A and FIG. 6B, the midamble of the number of shifts (midamble shift) which corresponds to the number of multiplexed spreading codes in the signal transmitted from the antenna branch is included in the signal transmitted from each antenna branch. FIG. 6A shows the correspondence relation between the number of spreading codes multiplexed in the signal transmitted from antenna branch 102 and number of shifts of the midamble (midamble shift) whereas FIG. 6B shows the correspondence relation between the number of spreading codes multiplexed in the signal transmitted from antenna 103 and number of shifts of the midamble (midamble shift). Since both FIG. 6A and FIG. 6B are known to BS 101 and each MS 111-1 to 111-10, each MS 111-1 to 111-10 can know the candidate number of spreading code multiplexed in the received signal by detecting the midamble shift.

Moreover, although the present Embodiment showed the case where BS 101 is provided with two antenna branches, the number of antenna branches may be as many as possible. In addition, the number of MS accommodated in the cell of BS 101 can be changed appropriately in the system under consideration as well as the spreading factor used in CDMA radio communication system shown in FIG. 4 can also be changed appropriately.

Each MS 111-1 to 111-10 is provided with a MUD. MS 111-1 to 111-10 receives the signal transmitted from BS 101, calculates, for each antenna branch, the symbol power of all spreading codes excluding the spreading code assigned to the respective MS among the spreading codes multiplexed in the received signal, selects the spreading codes which are serve as interference codes, for each antenna branch, according to the common midamble included in the received signal and the calculated symbol power then mitigates the interference caused by the selected spreading codes using MUD.

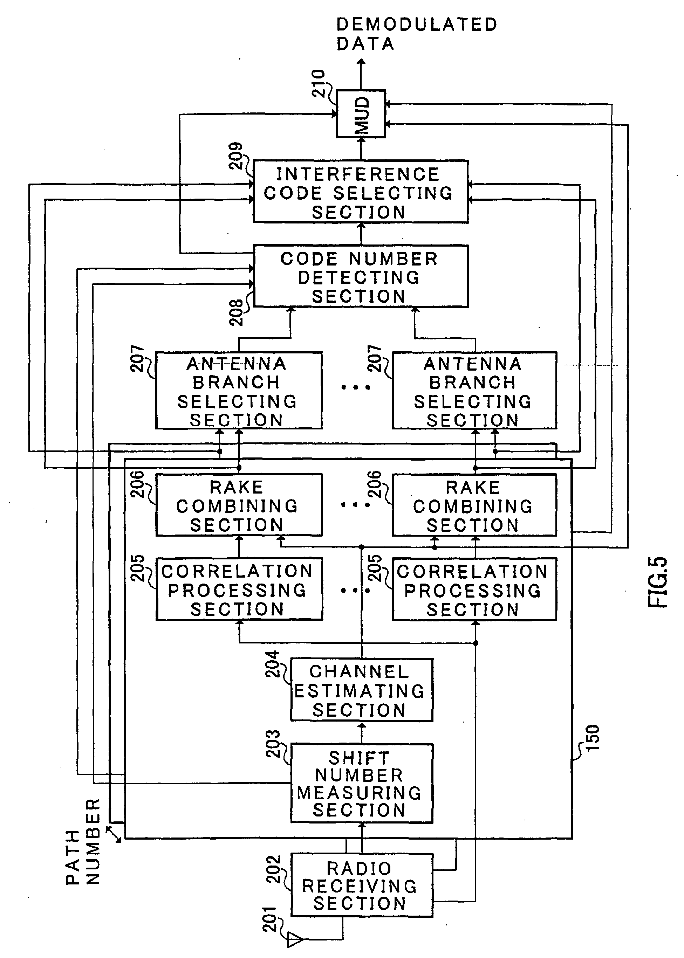

A configuration of the MS 111-1 is shown in FIG. 5. Also, the configuration of MS 111-2 to 111-10 is similar to the configuration of MS 111-1.

As shown in this figure, the MS 111-1 is configured to be provided with; radio receiving section 202 which performs predetermined radio reception processing of a down conversion, such as A/D conversion, etc. to the signal received by antenna 201 of MS 111-1, symbol power calculating unit 150 which calculates, for both antenna branches 102 and 103 provided to BS 101, the symbol power of all spreading codes excluding the spreading code assigned to MS 111-1 apparatus among the 16 spreading codes used in the system under consideration, antenna branch selecting section 207 which selects the largest symbol power antenna branch according to a comparison result among all symbol power antenna branches, code number detecting section 208 which detects the candidate number of the spreading code corresponding to a midamble shift, interference code selecting section 209 which selects interference codes among the spreading codes multiplexed in the receiving signal, and MUD 210 which cancels the interference by subtracting the interference replica from the receiving signal.

The power calculating unit 150 is configured to be provided with; shift number measuring section 203 which measures the number of shifts from a reference time of the midamble included in the receiving signal, channel estimating section 204 which performs channel estimation using midamble included in the receiving signal, correlation processing section 205 which performs correlation processing using spreading code peculiarly assigned to each MS 111-1 to 111-10, and RAKE combining section which performs RAKE combining of the correlation processing results in correlation processing section 205 and adds up the RAKE combining results over a predetermined time interval in order to obtain the symbol power. In order that the processing from these correlation processing section 205 to RAKE combining section 206 may calculate the symbol power of all the 16 spreading codes used in the system under consideration, the same number as these spreading codes are set. In other words, 16 units are set in the present Embodiment. As the number of antenna branches which use symbol power calculating unit 150 for the transmitting diversity of base station apparatus, i.e., the number of propagation paths (2 in the present Embodiment) is assigned, MS 111-1 can calculate, for all antenna branches, the symbol power of all the 16 spreading codes used by the system under consideration.

Next, the operation of the interference cancellation in the MS having the aforementioned configuration will be explained below. Since the operational explanation of each MS is the same, here, the operational explanation of MS 111-1 is given as an example.

First, signal of each of MS 111-1 to 111-10 allocated to one same antenna branch by transmitting selecting diversity are multiplexed and transmitted from BS 101. The midamble of the shift number (midamble shift) which is corresponding to the multiplexed spreading code number is included in the transmission signal. Such a correspondence relation is shown in FIG. 6A and FIG. 6B.

In MS 111-1, the receiving signal received by antenna 201 is subjected to predetermined radio reception processing in radio receiving section 202 and outputted to shift number measuring section 203 and correlation processing section 205. The shift number (midamble shift) of a common midamble included in the receiving signal is measured in shift number measuring section 203. Channel estimation is executed with reference to midamble in channel estimating section 204, and the channel estimation value is outputted to RAKE combining section 206. Correlation processing which carries out the multiplication of each of the 16 spreading codes used by the system under consideration is carried out in correlation processing section 205, and thereby, the receiving symbol is obtained. The channel estimation value is complex multiplied by the receiving symbol, synchronous detection is executed and RAKE combining of the receiving symbol is performed in RAKE combining section 206. The symbol power is obtained by adding up the RAKE combining results over a predetermined time interval. The symbol power shows the level of the correlation between the multiplied spreading code and the receiving signal. The symbol power is normalized such that, since the spreading code is multiplexed in the BS transmission signal, the correlation level is high, and thereby the symbol power is set to 1, on the other hand, since the spreading code is not multiplexed, the correlation level is low and hence the symbol power is set to 0. Each symbol power is outputted to antenna branch selecting section 207.

In antenna branch selecting section 207, the outputted symbol power which is calculated for every antenna branch is compared for each of the 16 spreading codes used by the system under consideration, and selecting the antenna branch of the largest symbol power as an antenna branch which transmits the signal obtained by carrying out multiplication of the spreading codes. Accordingly, MS 111-1 can know which antenna branch transmitted the signal obtained by multiplying the spreading code assigned thereto. Moreover, it can be known also which antenna branch transmitted the signal obtained by multiplying the spreading codes caused interference (interference codes). The antenna branch selection result is outputted to code number detecting section 208. The candidate of the multiplexed spreading code number corresponds to the shift number of the midamble measured by shift number measuring section 203 with reference to FIG. 6A and FIG. 6B is detected in code number detecting section 208. FIG. 6A and FIG. 6B show the correspondence relation between the spreading code number multiplexed in the signal transmitted by each antenna branch and the number of shifts from the reference time of the common midamble. All spreading codes excluding the spreading code assigned to MS 111-1 among the spreading codes multiplexed in the signal transmitted from each antenna branch cause interference. Therefore, the number of interference codes multiplexed in the signal transmitted from the antenna branch which is selected as transmitting origin of the signal obtained by carrying out the multiplication of the spreading code assigned to MS 111-1 apparatus in the antenna branch selecting section 207 becomes the number which subtracts the spreading code number assigned to MS 111-1 apparatus from the total multiplexed spreading codes numbers. Moreover, the number of interference codes multiplexed in the signal transmitted from the antenna branch which is not selected as transmitting origin of the signal obtained by carrying out the multiplication of the spreading code assigned to MS 111-1 is the same as the total number of the multiplexed spreading codes.

It is assumed here that antenna branch 102 is selected as a transmitting origin of the signal obtained by carrying out the multiplication of spreading code assigned to MS 111-1. Therefore, the number of interference code multiplexed in the signal transmitted from antenna branch 102 becomes the number which subtracts the number of spreading code assigned to MS 111-1 apparatus from the total number of all spreading codes multiplexed in the signal which is transmitted from antenna branch 102. On the other hand, the number of interference code multiplexed in the signal transmitted from antenna branch 103 is the number of spreading code multiplexed in the signal transmitted from antenna branch 103.

In the interference code selecting section 209, the symbol power calculated for the 16 spreading codes used in the system under consideration are all subjected to comparison with reference to the candidate of the number of interference codes selected in code number detecting section 208, and the interference codes are selected from all spreading codes used in the system under consideration. This selection is performed for every antenna branch.

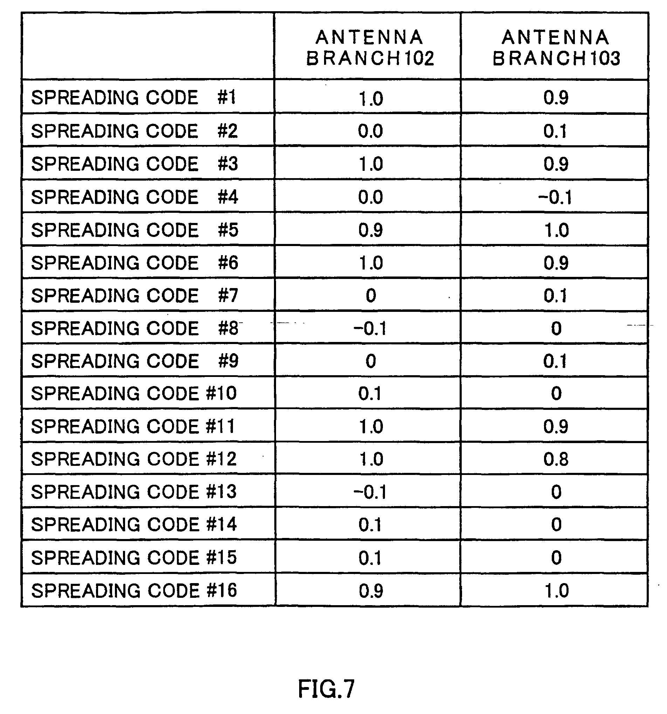

Next, the procedures for selecting the interference codes in antenna branch selecting section 207, code number detecting section 208 and interference code selecting section 209 will be explained below with reference to FIG. 7. The calculation results of the symbol power of each path is shown in FIG. 7. Here, as an example, the shift number of the midamble included in the signal transmitted from antenna branch 102 is 0 whereas the shift number of the midamble included in the signal transmitted from antenna branch 103 is 5. The number of the multiplexed spreading codes in case of 0 shift number of the midamble is either 1, 5, 9 or 13 as shown in FIG. 6A while the number of the multiplexed spreading codes in case of 5 shift number is either 2, 6, 10 or 14 as shown in FIG. 6B.

In FIG. 7, since the symbol power of the antenna branch 102 corresponds to spreading code #1 is the largest when the symbol power of the antenna branch 102 and the antenna branch 103 are compared, MS 111-1 determines that the signal obtained by carrying out the multiplication of the spreading code assigned to MS 111-1 apparatus is transmitted from the antenna branch 102. If the signal obtained by carrying out the multiplication of the spreading code assigned to MS 111-1 apparatus is transmitted from antenna branch 102 and only one spreading code that is assigned to MS 111-1 apparatus is considered, then the candidate of the number of interference code of the antenna branch 102 is either 0, 4, 8 or 12, and the candidate of the number of interference code of the antenna branch 103 is either 2, 6, 10 or 14.

Referring to FIG. 7, the symbol power of antenna branch 102 correspond to spreading code #3, spreading code #4, spreading code #6, spreading code #10, spreading code #11, spreading code #12, spreading code #14 and spreading code #15 among all interference codes are larger. On the other hand, the symbol power of antenna branch 103 correspond to spreading code #2, spreading code #5, spreading code #7, spreading code #8, spreading code #9, spreading code #13 and spreading code #16 are larger. In such a case, antenna branch selecting section 207 determines that the signal obtained by carrying out the multiplication of the spreading code #3, spreading code #4, spreading code #6, spreading code #10, spreading code #11, spreading code #12, spreading code #14 and spreading code #15 is transmitted from antenna branch 102. That is to say, antenna branch 102 is selected as the transmitting origin of these spreading codes. On the other hand, antenna branch selecting section 207 also determines that the signal obtained by carrying out the multiplication of spreading code #2, spreading code #5, spreading code #7, spreading code #8, spreading code #9, spreading code #13 and spreading code #16 is transmitted from antenna branch 103. That is to say, antenna branch 103 is selected as the transmitting origin of these spreading codes.

Next, interference code selecting section 209 takes an approximation value 1 of the symbol power correspond to spreading code #3, spreading code #6, spreading code #11 and spreading code #12 among the selected spreading codes of antenna branch 102. Since other spreading codes excluding these spreading codes have taken the approximation value 0, it is considered that 4 are included in the candidate of the interference code number, and these 4 spreading codes (spreading code #3, spreading code #6, spreading code #11 and spreading code #12) are selected as interference codes which are multiplexed in the signal transmitted from antenna branch 102. Although there are 0, 8, and 12 other than 4 as a candidate of the number of interference codes with reference to FIG. 6, among the 8 spreading codes selected by the antenna branch 102, namely, spreading code #3, spreading code #4, spreading code #6, spreading code #10, spreading code #11, spreading code #12, spreading code #14 and spreading code #15, the symbol power of spreading code #3, spreading code #6, spreading code #11 and spreading code #12 is about 1. Since the symbol power of the spreading codes excluding spreading code #4, spreading code #10, spreading code #14 and spreading code #15 is about 0, it is possible to select, easily, 4 from the candidates as the number of interference code.

On the other hand, the symbol power of the spreading code #5 and spreading code #16 among all spreading codes of the selected antenna branch 103 takes an approximation value of 1. Since other spreading codes excluding these spreading codes have taken the approximation value 0, it is considered that 2 are included in the candidate of the interference code number, and these 2 spreading codes (spreading code #5 and spreading code #16) are selected as interference codes which are multiplexed in the signal transmitted from antenna branch 103. Also in this case, there is no other choice except to select 2 as the number of interference codes.

In addition, although the case where BS 101 is provided with two antenna branches was explained in the present embodiment, but this invention is not limited to this, and it is possible to have 3 or more antenna branches. Similarly, interference codes can be selected even in the case where 3 or more antenna branches are provided.

Thus, the information on the selected interference code is outputted to MUD 210. The MUD210 can know, for every antenna branch, which spreading codes serve as interference codes among all spreading codes used in the system under consideration based on the output of interference code selecting section 209. MUD210 performs correlation processing on the receiving signal using the spreading code selected as an interference code, then, by complex multiplying the channel estimation value of the propagation path corresponding to the antenna branch by which the signal obtained by carrying out multiplication of the interference codes and the correlation processing result was transmitted, compensates the distortion in the channel and generates a reproduction of the demodulated data of the interference users (interference replica), finally, mitigates the influence of the interference by subtracting the interference replica from the receiving signal.

According to the present embodiment as described above, MS can calculate, for each antenna branch, the symbol power of spreading codes excluding the spreading code assigned thereto, and can specify the propagation path that corresponds to the antenna branch to which the signal obtained by carrying out multiplication of each interference code is transmitted by selecting the interference code for every antenna branch based on the calculated symbol. Thereby, interference cancellation processing can be performed using the channel estimation value of the propagation path along with each interference code.

Moreover, although the case when using the interference canceller of multiuser type (MUD) is explained in the present embodiment, the present invention is not limited to this, and the interference canceller of single type can also be used.

The present application is based on the Japanese Patent Application No. 2000-269984 filed on Sep. 6, 2000. Entire content of which is expressly incorporated by reference herein.

### Industrial Applicability

The present invention relates to an interference canceller that mitigates the influence of the interference from other users in a radio communication system based on CDMA technology, specifically, it is applicable to an interference canceller of a multiuser type.

## Claims

1. A radio communication terminal apparatus which carries out radio communications based on CDMA technology with a base station apparatus which is provided with a plurality of antenna branches to carry out transmitting selection diversity, comprising:
symbol power calculating means for calculating symbol power of spreading codes excluding a spreading code assigned to said radio communication terminal apparatus for every antenna branch;
interference code number detecting means for detecting interference code number for every antenna branch with reference to a common known signal included in a receiving signal;
interference code selecting means for selecting interference code corresponding to the number of interference code detected in said interference code number detecting means with reference to the symbol power calculated in said symbol power calculating means; and
interference canceller for cancelling the interference caused by the interference codes selected by said interference code selecting means for every antenna branch.

2. The radio communication terminal apparatus according to claim 1, wherein said interference code number detecting means detects the interference code number for every antenna branch according to a common midamble with which the number of shifts from a reference time corresponds to the interference code number of each antenna branch.

3. The radio communication terminal apparatus according to claim 1, wherein said interference code selecting means compares between the symbol power for every antenna branch corresponding to all spreading codes excluding the spreading code assigned to said radio communication terminal apparatus, and selects a spreading code with the largest symbol power in the respective antenna branch as an interference code of the respective antenna branch corresponding to interference code number detected by said interference code number detecting means in sequential order with large symbol power.

4. The radio communication terminal apparatus according to claim 1, wherein interference canceller performs correlation processing to a receiving signal using the interference code selected by said interference code selecting means, then, generates interference replica by complex multiplying channel estimation value of the antenna branch to which the interference code is transmitted by the correlation processing result.

5. A cancellation method comprising:
step of receiving the signal transmitted based on CDMA technology from a base station apparatus which is provided with a plurality of antenna branches and carrying out transmitting selection diversity;
step of calculating symbol power of spreading codes excluding a spreading code assigned to communication terminal apparatus for every antenna branch;
step of detecting interference code number for every antenna branch with reference to a common known signal included in a receiving signal;
step of selecting interference code corresponding to the number of interference code detected with reference to the calculated symbol power; and
step of cancelling interference based on selected interference code.
